# EUROPÄISCHE PATENTSCHRIFT

(11) **EP 3 795 836 B1**
(45) Veröffentlichungstag und Bekanntmachung des Hinweises auf die Patenterteilung: **27.11.2024**
(21) Anmeldenummer: 20190815.9
(22) Anmeldetag: 13.08.2020
(51) Int. Cl.: F04D 13/06, F04D 29/048, F04D 29/42

(54) **ZENTRIFUGALPUMPE**
CENTRIFUGAL PUMP
POMPE CENTRIFUGE

(30) Priorität: 18.09.2019 EP 19198087
(43) Veröffentlichungstag der Anmeldung: 24.03.2021
(73) Patentinhaber: Levitronix GmbH, 8048 Zürich (CH)
(72) Erfinder: Schmid, Alexander, 8915 Hausen am Albis (CH); Stettler, Marcel, 5600 Lenzburg (CH)
(74) Vertreter: IPS Irsch AG

(56) Entgegenhaltungen:
- EP-A1- 3 232 549
- EP-B1- 0 819 330
- EP-B1- 0 860 046
- WO-A1-2012/159966
- CN-A- 103 023 265
- RU-C1- 2 196 253
- US-A1- 2003 031 560
- US-A1- 2019 055 946

## Beschreibung

Die Erfindung betrifft eine Zentrifugalpumpe zum Fördern eines Fluids sowie ein Pumpengehäuse gemäss dem Oberbegriff des unabhängigen Patentanspruchs der jeweiligen Kategorie.

Es sind Zentrifugalpumpen bekannt, welche einen elektromagnetischen Drehantrieb umfassen, der nach dem Prinzip des lagerlosen Motors ausgestaltet ist und betrieben wird. Mit dem Begriff lagerloser Motor ist dabei ein elektromagnetischer Drehantrieb gemeint, bei welchem der Rotor vollkommen magnetisch bezüglich des Stators gelagert ist, wobei keine separaten magnetischen Lager vorgesehen sind. Der Stator ist dazu als Lager- und Antriebsstator ausgestaltet, der sowohl Stator des elektrischen Antriebs als auch Stator der magnetischen Lagerung ist. Mit den elektrischen Wicklungen des Stators lässt sich ein magnetisches Drehfeld erzeugen, welches zum einen ein Drehmoment auf den Rotor ausübt, das dessen Rotation bewirkt, und welches zum anderen eine beliebig einstellbare Querkraft auf den Rotor ausübt, sodass dessen radiale Position aktiv steuerbar bzw. regelbar ist. Somit sind drei Freiheitsgrade des Rotors aktiv regelbar, nämlich seine Rotation sowie seine radiale Position (zwei Freiheitsgrade). Bezüglich dreier weiterer Freiheitsgrade, nämlich seiner Position in axialer Richtung und Verkippungen bezüglich der zur Solldrehachse senkrechten radialen Ebene (zwei Freiheitsgrade), ist der Rotor passiv magnetisch, das heisst nicht ansteuerbar, durch Reluktanzkräfte gelagert bzw. stabilisiert. Das Nichtvorhandensein eines separaten magnetischen Lagers bei vollständiger magnetischer Lagerung des Rotors ist die Eigenschaft, welcher der lagerlose Motor seinen Namen verdankt.

Der lagerlose Motor ist dem Fachmann mittlerweile hinlänglich bekannt, und wird für zahlreiche verschiedene Anwendungen eingesetzt. Grundlegende Beschreibungen finden sich beispielsweise in der WO2012159966 A1, EP A 0 860 046 und in der EP-A-0 819 330.

Zentrifugalpumpen, die nach dem Prinzip des lagerlosen Motors ausgestaltet sind, haben sich in einer Vielzahl von Anwendungen bewährt.

Aufgrund der Abwesenheit von mechanischen Lagern eignet sich eine Zentrifugalpumpe mit einem lagerlosen Motor insbesondere für solche Anwendungen, bei denen sehr empfindliche Substanzen gefördert werden, beispielsweise Blutpumpen, oder bei denen sehr hohe Anforderungen an die Reinheit gestellt werden, beispielsweise in der pharmazeutischen Industrie oder in der biotechnologischen Industrie, oder bei denen abrasive oder aggressive Substanzen gefördert werden, welche mechanische Lager sehr schnell zerstören würden, beispielsweise Pumpen für Slurry oder säurehaltige Fluide in der Halbleiterindustrie.

Ein weiterer Vorteil des Prinzips des lagerlosen Motors ergibt sich bei der Ausgestaltung des Rotors als Integralrotor, der sowohl der Rotor des elektromagnetischen Antriebs ist, als auch der Rotor der Zentrifugalpumpe. Neben der berührungslosen magnetischen Lagerung resultiert hier der Vorteil einer sehr kompakten und platzsparenden Ausgestaltung.

Zudem erlaubt das Prinzip des lagerlosen Motors auch Ausgestaltungen von Zentrifugalpumpen, bei denen der Rotor oder das Pumpengehäuse mit dem darin angeordneten Rotor sehr leicht vom Stator trennbar ist. Dies ist ein sehr grosser Vorteil, weil damit beispielsweise das Pumpengehäuse als Einmalteil für den Einmalgebrauch ausgestaltet werden kann. Solche Einmalanwendungen ersetzen heute häufig Prozesse, bei denen früher aufgrund der sehr hohen Reinheitsanforderungen alle diejenigen Komponenten, welche im Prozess mit den zu behandelnden Fluiden in Kontakt kommen, aufwändig gereinigt und sterilisiert werden müssen, beispielsweise mittels Dampfsterilisierung. Bei der Ausgestaltung für den Einmalgebrauch werden diejenigen Komponenten, welche mit den zu behandelnden Fluiden in Kontakt kommen, nur genau einmal verwendet und dann bei der nächsten Anwendung durch neue, das heisst ungebrauchte, Einmalteile ersetzt.

Bei alle diesen Anwendungen, bei denen der lagerlose Motor in Zentrifugalpumpen erfolgreich eingesetzt wird, ist es prinzipiell möglich, den lagerlosen Motor als Innenläufer, das heisst mit innenliegendem Rotor und darum herum angeordneten Stator, oder als Aussenläufer, das heisst mit innenliegendem Stator und darum herum angeordneten Rotor auszugestalten. Bei beiden Ausgestaltungen hat es sich jedoch gezeigt, dass für manche Anwendungen die passive magnetische Stabilisierung des Rotors gegen Verschiebungen in der axialen Richtung und auch gegen Verkippungen zur radialen Ebene an ihre Grenzen geraten oder sogar nicht mehr ausreichend sein kann, um einen sicheren und störungsfreien Betrieb der Zentrifugalpumpe zu gewährleisten.

Ausgehend von diesem Stand der Technik ist es daher eine Aufgabe der Erfindung, eine Zentrifugalpumpe mit einem elektromagnetischen Drehantrieb vorzuschlagen, der einen magnetisch berührungslos antreibbaren sowie magnetisch berührungslos lagerbaren Rotor umfasst, wobei die passive magnetische Stabilisierung des Rotors insbesondere gegenüber Verschiebungen in der axialen Richtung verbessert ist. Zudem ist es eine Aufgabe der Erfindung, ein Pumpengehäuse für eine solche Zentrifugalpumpe zu vorzuschlagen.

Die diese Aufgabe lösenden Gegenstände der Erfindung sind durch die Merkmale des unabhängigen Patentanspruchs der jeweiligen Kategorie gekennzeichnet.

Erfindungsgemäss wird also Zentrifugalpumpe zum Fördern eines Fluids vorgeschlagen, mit einem Pumpengehäuse, in welchem ein Rotor zum Fördern des Fluids vorgesehen ist, und mit einem Stator, der mit dem Rotor einen elektromagnetischen Drehantrieb zum Rotieren des Rotors um eine axiale Richtung bildet, wobei der Stator als Lager- und Antriebsstator ausgestaltet ist, mit welchem der Rotor berührungslos magnetisch antreibbar und berührungslos magnetisch bezüglich des Stators lagerbar ist, wobei der Rotor in der axialen Richtung magnetisch passiv gelagert ist, und in einer zur axialen Richtung senkrechten radialen Ebene aktiv magnetisch gelagert ist, wobei das Pumpengehäuse einen Boden und einen Deckel umfasst, wobei der Rotor bezüglich der axialen Richtung zwischen dem Boden und dem Deckel in dem Pumpengehäuse angeordnet ist, und wobei im Boden und/oder in dem Deckel mindestens eine Einbuchtung vorgesehen ist, welche zum Erzeugen einer lokalen Turbulenz ausgestaltet ist.

Die Erfindung beruht auf der Erkenntnis, dass sich mittels der mindestens einen Einbuchtung im Pumpengehäuse die Strömungsverhältnisse im Pumpengehäuse derart beeinflussen lassen, dass insbesondere die in axialer Richtung auf den Rotor wirkenden Kräfte reduziert werden können. Durch diese Reduktion wird die magnetische Axiallagerung des Rotors entlastet, wodurch eine deutliche Verbesserung der passiven magnetischen Stabilisierung des Rotors erzielt wird. Auch hat es sich gezeigt, dass sich durch die mindestens eine Einbuchtung die passive magnetische Stabilisierung gegen Verkippungen des Rotors zu einer radialen Ebene, welche senkrecht zur axialen Richtung liegt, deutlich verbessern lässt. Durch die Erzeugung lokaler Turbulenzen wird somit gezielt das Strömungsverhalten um den Rotor herum geändert, sodass die auf den Rotor wirkenden Kräfte und insbesondere die in axialer Richtung wirkenden Kräfte reduziert werden.

Für die Erfindung sind prinzipiell weder geometrische Barrieren zur Reduktion der Rückströmung von der Druckseite auf die Saugseite bzw. zur Reduktion der Geschwindigkeit dieser Rückströmung notwendig, noch Entlastungsbohrungen, die sich zum Druckausgleich in axialer Richtung vollständig durch den Rotor hindurch erstrecken. Die mindestens eine Einbuchtung führt zu einer lokalen Verwirbelung und/oder zu Strömungsablösungen, welche die Krafteinwirkung der Strömung auf die umströmte Oberfläche des Rotors reduziert. Durch eine Reduktion des dynamischen Auftriebs, die beispielsweise aus der von der Einbuchtung verursachten Strömungsablösung resultiert, reduziert sich auch die auf den Rotor wirkende Kraft.

Gemäss einer bevorzugten Ausgestaltung umfasst der Rotor einen ringförmigen oder scheibenförmigen magnetisch wirksamen Kern, sowie ein Laufrad mit einer Mehrzahl von Flügeln zum Fördern des Fluids. Dabei wirkt der magnetische Kern mit dem Stator zusammen, um den Rotor berührungslos anzutreiben und berührungslos zu lagern, während das Laufrad mit den Flügeln das Fluid fördert.

Vorzugsweise ist die Zentrifugalpumpe mit einem radialen Laufrad ausgestaltet. Dabei ist am Deckel des Pumpengehäuses ein Einlass für das Fluid vorgesehen, welcher so ausgestaltet ist, dass das Fluid in axialer Richtung in das Pumpengehäuse einströmen kann. Ferner umfasst das Pumpengehäuse einen Auslass für das Fluid, welcher so ausgestaltet ist, dass das Fluid in einer radialen Richtung aus dem Pumpengehäuse herausströmen kann. Das Laufrad wird also in axialer Richtung angeströmt und fördert das Fluid in eine dazu senkrechte Richtung. In anderen Ausgestaltungen kann das Laufrad auch als semi-axiales Laufrad ausgestaltet sein.

Ferner ist es bevorzugt, wenn der Drehantrieb der Zentrifugalpumpe nach dem Prinzip eines Innenläufers ausgestaltet ist. Dazu weist der Stator beispielsweise eine Vielzahl von Statorpolen auf, die ringförmig angeordnet sind, und das Pumpengehäuse mit dem darin angeordneten Rotor ist so ausgestaltet, dass es zwischen den Statorpolen derart in den Stator einsetzbar ist, dass der magnetisch wirksame Kern des Rotors von den Statorpolen umgeben ist.

In der Praxis hat es sich als vorteilhaft erwiesen, dass der Rotor einen Aussendurchmesser hat, und jede Einbuchtung bezüglich der radialen Richtung eine Erstreckung aufweist, die mindestens ein Fünfzigstel des Aussendurchmessers des Rotors beträgt.

Ferner ist es vorteilhaft, wenn der Rotor einen Aussendurchmesser hat, und jede Einbuchtung bezüglich der radialen Richtung eine Erstreckung aufweist, die höchstens die Hälfte des Aussendurchmessers des Rotors beträgt.

Eine weitere bevorzugte Massnahme besteht darin, dass der Rotor einen Aussendurchmesser hat, und jede Einbuchtung bezüglich der axialen Richtung eine Tiefe aufweist, die mindestens ein Hundertfünfzigstel, vorzugsweise mindestens ein Hundertstel des Aussendurchmessers des Rotors beträgt.

Auch ist es bevorzugt, dass der Rotor einen Aussendurchmesser hat, und jede Einbuchtung bezüglich der axialen Richtung eine Tiefe aufweist, die höchstens ein Zehntel des Aussendurchmessers des Rotors beträgt.

Die gewünschte Reduzierung der auf den Rotor wirkenden Kräfte und Verkippungsmomente lässt sich mit mehreren Faktoren beeinflussen, die für den jeweiligen Anwendungsfall optimiert werden können. Diese Faktoren umfassen insbesondere die Anzahl der Einbuchtungen, die Position der Einbuchtungen sowie die geometrischen Abmessungen der Einbuchtungen, also insbesondere ihre Erstreckung in radialer Richtung und ihre Erstreckung in axialer Richtung. Falls mehrere Einbuchtungen am Deckel und/oder am Boden vorgesehen sind, so ist es natürlich nicht notwendig, dass alle Einbuchtungen dieselben Abmessungen aufweisen müssen. Es ist durchaus auch möglich, dass die Einbuchtungen unterschiedliche Abmessungen und/oder Geometrien haben.

Einen geringeren Einfluss hat die spezifische Form der Einbuchtung. Die Einbuchtungen können beispielsweise mit einem quadratischen Profil ausgestaltet sein oder mit einem rechteckigen Profil. Die Einbuchtungen können pyramidenförmig, kegelförmig, kegelstumpfförmig, ringförmig oder auch mit einer Freiformgeometrie ausgestaltet sein. Die Einbuchtung oder die Einbuchtungen sollte(n) lediglich so ausgestaltet sein, dass die lokale Oberflächenbeschaffenheit derart geändert wird, dass die Strömung des Fluids an dieser Stelle verwirbelt wird.

Aus fertigungstechnischen Gründen ist es jedoch bevorzugt, dass jede Einbuchtung senkrecht zur axialen Richtung ein kreisförmiges Profil aufweist. Dazu ist beispielsweise jede Einbuchtung als Sacklochbohrung ausgestaltet, deren Durchmesser die Erstreckung der Einbuchtung in radialer Richtung festlegt, und deren Länge die Tiefe der Einbuchtung in axialer Richtung festlegt.

Gemäss einer bevorzugten Ausführungsform ist sowohl im Deckel als auch im Boden des Pumpengehäuses mindestens eine Einbuchtung vorgesehen.

Eine weitere bevorzugte Massnahme besteht darin, dass jede Einbuchtung in einem radial aussen liegenden Randbereich des Pumpengehäuses angeordnet ist. Das bedeutet insbesondere, dass jede Einbuchtung im Deckel des Pumpengehäuses näher am radial äusseren Rand des Deckels liegt als am Zentrum des Deckels, und dass jede Einbuchtung im Boden des Pumpengehäuses näher am radial äusseren Rand des Bodens liegt als am Zentrum des Bodens.

Vorzugsweise ist das Pumpengehäuse aus einem Kunststoff oder aus einem metallischen Material gefertigt.

Auch ist es bevorzugt, dass das Laufrad aus einem Kunststoff oder aus einem metallischen Material gefertigt ist.

Eine weitere vorteilhafte Massnahme ist es, dass der Rotor eine Ummantelung aufweist, welche den magnetisch wirksamen Kern des Rotors vollständig umschliesst, sodass der magnetisch wirksame Kern nicht mit dem Fluid in Kontakt kommt. Die Ummantelung ist bevorzugt aus einem Kunststoff gefertigt, kann aber auch aus einem metallischen Material gefertigt sein.

Das Pumpengehäuse, das Laufrad und die Ummantelung können aus dem gleichen Kunststoff oder metallischen Material gefertigt sein oder aus verschiedenen Kunststoffen oder aus verschiedenen metallischen Materialien. Natürlich sind auch Kombinationen aus Kunststoffen oder metallischen Materialien möglich, beispielsweise kann die Ummantelung des Rotors aus einem Kunststoff gefertigt sein und das Pumpengehäuse aus einem metallischen Material.

Um die passive magnetische Stabilisierung oder Lagerung des Rotors bezüglich dreier Freiheitsgrade (Verschiebungen in axialer Richtung, Verkippungen gegenüber der radialen Ebene) noch weiter zu entlasten und damit die Stabilisierung des Rotors bezüglich dieser drei Freiheitsgrade noch zu verbessern, sind weitere Massnahmen möglich, die in nicht abschliessender Aufzählung wiedergegeben werden:
Der Rotor kann eine Deckplatte aufweisen, welche die Flügel des Laufrads an ihrer dem Einlass zugewandten Seite überdeckt, wobei in der Deckplatte eine zentral angeordnete Öffnung vorgesehen ist, durch welche das Fluid das Laufrad anströmen kann.

Der magnetisch wirksame Kern des Rotors kann eine zentrale Bohrung aufweisen die sich in axialer Richtung vollständig durch den magnetisch wirksamen Kern sowie die optionale Ummantelung hindurch erstreckt.

Der Rotor kann eine Ausgleichsbohrung oder eine Mehrzahl von Ausgleichsbohrungen umfassen, wobei sich jede Ausgleichsbohrung in axialer Richtung vollständig durch den magnetisch wirksamen Kern des Rotors sowie die optionale Ummantelung hindurch erstrecken. Jede Ausgleichsbohrung ist vorzugsweise dezentral, also nicht im Zentrum, des Rotors angeordnet.

Falls eine Mehrzahl von Ausgleichsbohrungen vorgesehen ist, so sind die Ausgleichsbohrungen vorzugsweise auf einer Kreislinie um die zentrale Bohrung oder um das Zentrum des Rotors herum angeordnet. Vorzugsweise sind höchstens oder genau acht Ausgleichsbohrungen vorgesehen, die vorzugsweise äquidistant um die zentrale Bohrung des Rotors oder um das Zentrum des Rotors herum angeordnet sind.

Vorzugsweise weist jede Ausgleichsbohrung jeweils einen Durchmesser auf, der kleiner ist als der Durchmesser der zentralen Bohrung.

Auf der dem Einlass abgewandten axialen Stirnfläche des Rotors kann eine Mehrzahl von rückwärtigen Schaufeln vorgesehen sein. Im Betriebszustand liegen diese rückwärtigen Schaufeln dem Boden des Pumpengehäuses gegenüber.

Die rückwärtigen Schaufeln können beispielsweise dadurch realisiert werden, dass in der Ummantelung der Rotors Ausnehmungen vorgesehen werden, sodass die rückwärtigen Schaufeln jeweils zwischen zwei benachbarten Ausnehmungen entstehen.

Ferner ist es möglich die rückwärtigen Schaufeln als Erhebungen auszugestalten. Dazu kann beispielsweise eine einem Laufrad ähnliche Struktur generiert werden, die dann auf der axialen Stirnfläche des Rotors befestigt wird, sodass die rückwärtigen Schaufeln dem Boden des Pumpengehäuses gegenüberliegen. Natürlich können die rückwärtigen Schaufeln auch einzeln gefertigt werden, und dann auf der axialen Stirnfläche des Rotors befestigt werden.

Vorzugsweise erstreckt sich jede rückwärtige Schaufel in radialer Richtung. Vorzugsweise beginnt jede rückwärtige Schaufel am radial äusseren Rand der axialen Stirnfläche des Rotors und erstreckt sich von dort radial nach innen. Dabei kann sich jede rückwärtige Schaufel bis in das Zentrum der axialen Stirnfläche bzw. bis an die zentrale Bohrung heran erstrecken oder jede rückwärtige Schaufel weist in radialer Richtung eine Länge auf, die kleiner ist als der Radius der axialen Stirnfläche, beispielsweise halb so gross.

Vorzugsweise ist der Auslass als ein Auslassstutzen ausgestaltet. Der Auslassstutzen erstreckt sich bevorzugt senkrecht zur axialen Richtung. Der Auslassstutzen hat vorzugsweise eine Eintrittsfläche, durch welche das Fluid in den Auslassstutzen eintritt, sowie eine Austrittsfläche, durch welche das Fluid den Auslassstutzen verlässt. Bevorzugt ist die Eintrittsfläche kleiner als die Austrittsfläche.

Vorzugsweise ist der Austrittsstutzen bezüglich seiner äusseren Form zylindrisch ausgestaltet. Bei der zylindrischen Ausgestaltung ist es bevorzugt, dass der Auslassstutzen eine Mittelachse aufweist und dass der Auslassstutzen bezüglich der axialen Richtung so angeordnet ist, dass die Mittelachse näher am magnetisch wirksamen Kern des Rotors ist als am Deckel des Pumpengehäuses.

Auch ist es möglich, den Einlass des Pumpengehäuses als Einlassstutzen auszugestalten, der sich vorzugsweise in axialer Richtung erstreckt. Der Einlassstutzen hat vorzugsweise eine Eintrittsfläche, durch welche das Fluid in den Einlassstutzen eintritt, sowie eine Austrittsfläche, durch welche das Fluid den Einlassstutzen verlässt und das Laufrad anströmt. Bevorzugt ist die Eintrittsfläche grösser als die Austrittsfläche. Ferner ist es bevorzugt wenn der Einlassstutzen einen Verengungsbereich aufweist, in welchem der Strömungsquerschnitt senkrecht zur axialen Richtung kleiner ist als die Eintrittsfläche und kleiner als die Austrittsfläche.

Eine weitere vorteilhafte Massnahme besteht darin, dass am Laufrad eine ring- oder kreisscheiben förmige Druckplatte vorgesehen ist, die senkrecht zur axialen Richtung ausgerichtet ist. Die Druckplatte ist bezüglich der axialen Richtung zwischen dem magnetisch wirksamen Kern und dem dem Deckel des Pumpengehäuses zugewandten Ende des Laufrads angeordnet, sodass sie sich zwischen den Flügeln des Laufrads erstreckt. Falls der Rotor eine Deckplatte hat, ist die Druckplatte bezüglich der axialen Richtung zwischen dem magnetisch wirksamen Kern und der Deckplatte angeordnet. Die Druckplatte erstreckt sich zwischen allen Flügeln.

Bezüglich der radialen Richtung ist die Druckplatte zentriert bezüglich des Rotors angeordnet und erstreckt sich in radialer Richtung vorzugsweise höchstens bis an das radial aussenliegende Ende der Flügel. Die Druckplatte kann aber auch bezüglich der radialen Richtung so ausgestaltet sein, dass ihr Durchmesser deutlich kleiner ist als der Durchmesser des Laufrads.

Falls der Rotor eine Ausgleichsbohrung oder eine Mehrzahl von Ausgleichsbohrungen aufweist ist die Druckplatte vorzugsweise bezüglich der radialen Richtung so bemessen, dass sie zumindest alle Ausgleichsbohrungen überdeckt.

Für die passive magnetische Stabilisierung des Rotors ist es besonders vorteilhaft, wenn der Durchmesser des magnetisch wirksamen Kerns des Rotors grösser ist als das 2,6-fache der Höhe des magnetisch wirksamen Kerns des Rotors, wobei die Höhe die Erstreckung in axialer Richtung ist. Wenn man also mit d den Durchmesser des magnetisch wirksamen Kerns des Rotors bezeichnet und mit HR die Höhe des magnetisch wirksamen Kerns in axialer Richtung, so ist es vorteilhaft, wenn die Bedingung d > 2.6 * HR erfüllt ist.

Die vorangehend aufgezählten Massnahmen können beispielsweise jeweils einzeln vorgesehen sein, oder es können auch mehrere Massnahmen, beispielsweise auch alle Massnahmen miteinander kombiniert werden.

Durch die Erfindung wird ferner ein Pumpengehäuse vorgeschlagen, in welchem ein Rotor zum Fördern eines Fluids vorgesehen ist, wobei das Pumpengehäuse für eine erfindungsgemässe Zentrifugalpumpe ausgestaltet ist.

Das erfindungsgemässe Pumpengehäuse kann insbesondere auch als Einmalteil für den Einmalgebrauch ausgestaltet sein. Der Stator der erfindungsgemässen Zentrifugalpumpe ist vorzugsweise als wiederverwendbare Vorrichtung für den Mehrfachgebrauch ausgestaltet.

Weitere vorteilhafte Massnahmen und Ausgestaltungen der Erfindung ergeben sich aus den abhängigen Ansprüchen.

Im Folgenden wird die Erfindung anhand von Ausführungsbeispielen und anhand der Zeichnung näher erläutert. In der schematischen Zeichnung zeigen (teilweise im Schnitt):
- Fig. 1:: eine schematische Schnittdarstellung einer Ausführungsform einer Zentrifugalpumpe, welche einen elektromagnetischen Drehantrieb umfasst, der als lagerloser Motor ausgestaltet ist,
- Fig. 2:: eine schematische Schnittdarstellung eines ersten Ausführungsbeispiels einer erfindungsgemässen Zentrifugalpumpe,
- Fig. 3:: eine vergrösserte Schnittdarstellung einer Einbuchtung,
- Fig. 4:: eine Schnittdarstellung des Deckels des ersten Ausführungsbeispiels aus Fig. 2,
- Fig. 5:: Eine Aufsicht auf den Deckel aus Fig. 4 vom Boden des Pumpengehäuses,
- Fig. 6:: eine Schnittdarstellung des Gehäuseteils des ersten Ausführungsbeispiels aus Fig. 2,
- Fig. 7.:: eine Aufsicht auf das Gehäuseteil aus Fig. 6 vom Deckel des Pumpengehäuses,
- Fig. 8:: eine schematische Schnittdarstellung eines zweiten Ausführungsbeispiels einer erfindungsgemässen Zentrifugalpumpe,
- Fig. 9:: eine Aufsicht auf den Rotor des zweiten Ausführungsbeispiels vom Boden des Pumpengehäuses aus, und
- Fig. 10: eine schematische Schnittdarstellung für eine Variante des Rotors.

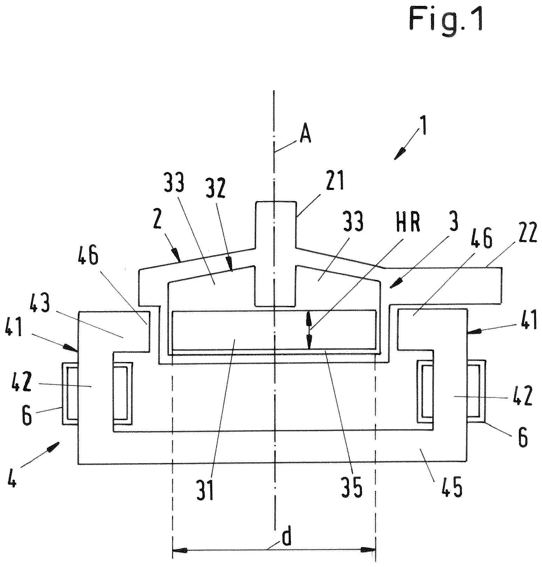

Zunächst wird anhand der schematischen Schnittdarstellung in Fig. 1 eine Ausführungsform einer Zentrifugalpumpe erläutert, welche einen elektromagnetischen Drehantrieb umfasst, der als lagerloser Motor ausgestaltet ist. Selbstverständlich kann diese Ausführungsform gemäss der Erfindung ausgestaltet sein.

Die Zentrifugalpumpe ist gesamthaft mit dem Bezugszeichen 1 bezeichnet. Die Zentrifugalpumpe 1 zum Fördern eines Fluids umfasst ein Pumpengehäuse 2 mit einem Einlass 21 und einem Auslass 22 für das zu fördernde Fluid. In dem Pumpengehäuse 2 ist ein Rotor 3 angeordnet, welcher zusammen mit einem ausserhalb des Pumpengehäuses 2 angeordneten Stator 4 einen elektromagnetischen Drehantrieb bildet, mit welchem der Rotor 3 zu einer Rotation um eine axiale Richtung A antreibbar ist.

Der elektromagnetische Drehantrieb ist als Innenläufer ausgestaltet, d.h. der Rotor 3 ist innerhalb des Stators 4 angeordnet, sodass der Stator 4 den Rotor 3 umgibt. Der Rotor 3 ist bezüglich des Stators 4 berührungslos magnetisch gelagert. Ferner ist der Rotor 3 mittels des Stators 4 berührungslos magnetisch zur Rotation um eine Solldrehachse antreibbar. Die Solldrehachse bezeichnet dabei diejenige Achse, um welche sich der Rotor 3 im Betriebszustand dreht, wenn sich der Rotor 3 bezüglich des Stators 4 in einer zentrierten und unverkippten Lage befindet. Diese Solldrehachse definiert eine axiale Richtung A. Üblicherweise stimmt die die axiale Richtung A festlegende Solldrehachse mit der Mittelachse des Stators 4 überein.

Im Folgenden wird mit einer radialen Richtung eine Richtung bezeichnet, welche senkrecht auf der axialen Richtung A steht.

Der Rotor 3 umfasst einen magnetisch wirksamen Kern 31, welcher in Form einer Kreisscheibe, beziehungsweise eines Kreiszylinders, oder ringförmig ausgestaltet ist. Mit dem "magnetisch wirksamen Kern 31" ist derjenige Bereich des Rotors 3 gemeint, welcher für die Drehmomentbildung sowie für die Erzeugung der magnetischen Lagerkräfte mit dem Stator 4 zusammenwirkt. Je nach Ausgestaltung kann der magnetische Kern 31 einen oder mehrere Permanentmagnete umfassen. Alternativ ist es auch möglich, den magnetisch wirksamen Kern 31 ohne Permanentmagnete auszugestalten, beispielsweise als Reluktanzläufer. Dabei besteht der magnetisch wirksame Kern 31 zumindest teilweise aus einem ferromagnetischen Material, beispielsweise Eisen.

Der magnetisch wirksame Kern 31 ist vorzugsweise mit einer Ummantelung 35 versehen, welche den magnetisch wirksamen Kern 31 vollständig einkapselt, sodass der magnetisch wirksame Kern 31 nicht mit dem zu fördernden Fluid in Kontakt kommt. Die Ummantelung 35 besteht vorzugsweise aus einem Kunststoff, kann aber auch aus einem metallischen Material bestehen.

Der Rotor 3 umfasst ferner ein Laufrad 32 mit einer Mehrzahl von Flügeln 33, um das Fluid vom Einlass 21 zum Auslass 22 zu fördern. Das Laufrad 32 ist auf der Ummantelung 35 angeordnet. Das Laufrad 32 mit den Flügeln 33 besteht vorzugsweise aus Kunststoff und kann beispielsweise einstückig mit der Ummantelung 35 ausgestaltet sein. Natürlich ist es auch möglich, die individuellen Flügel 33 oder die Gesamtheit der Flügel 33 in einem separaten Fertigungsprozess herzustellen und sie dann mit der Ummantelung 35 zu verbinden, beispielsweise mittels eines Schweissprozesses. Natürlich ist es auch möglich, das Laufrad aus einem metallischen Werkstoff zu fertigen.

Das Laufrad 32 ist vorzugsweise als radiales Laufrad 32 ausgestaltet, welches von dem Fluid in axialer Richtung A angeströmt wird, und das Fluid dann in eine radiale Richtung umlenkt.

Der Drehantrieb mit dem Stator 4 und dem Rotor 3 ist beispielsweise als sogenannter Tempelmotor ausgestaltet.

Das Charakteristische einer Ausgestaltung als Tempelmotor ist es, dass der Stator 4 eine Mehrzahl von separaten Spulenkernen 41 - beispielsweise sechs Spulenkerne 41 - umfasst, von denen jeder einen stabförmigen Längsschenkel 42 umfasst, welcher sich von einem ersten Ende in axialer Richtung A bis zu einem zweiten Ende erstreckt, wobei alle ersten Enden - gemäss der Darstellung in Fig. 1 sind dies die unteren Enden - durch einen Rückschluss 45 miteinander verbunden sind. Ferner umfasst jeder Spulenkern 41 einen Querschenkel 43, welcher an dem zweiten Ende des jeweiligen Längsschenkels 42 angeordnet ist, und welcher sich in radialer Richtung, also senkrecht zur axialen Richtung A und damit senkrecht zu dem jeweiligen Längsschenkel 42 erstreckt. Jeder Querschenkel 43 erstreckt sich in radialer Richtung nach innen, also auf den Rotor 3 zu. Jeder Spulenkern 41 hat somit eine L-förmige Ausgestaltung, wobei die Längsschenkel 42 jeweils den sich in axialer Richtung A erstreckenden langen Schenkel des L bilden, und die sich senkrecht zu den Längsschenkeln 42 in radialer Richtung auf den Rotor 3 hin gerichtet erstreckenden Querschenkel 43 jeweils den kurzen Schenkel des L bilden.

Die radial innen liegenden Enden der Querschenkel 43 bilden jeweils einen Statorpol 46. Die Statorpole 46 sind ringförmig um das Pumpengehäuse 2 mit dem darin befindlichen Rotor 3 herum angeordnet. Das Pumpengehäuse 2 ist derart ausgestaltet, dass es in den Stator 4, genauer gesagt zwischen die Statorpole 46, einsetzbar ist, sodass die Statorpole 46 den magnetisch wirksamen Kern 31 des Rotors 3 umgeben. Im Betriebszustand befinden sich die Statorpole 46 und der magnetisch wirksame Kern 31 des Rotors 3 bezüglich der axialen Richtung A auf gleicher Höhe, wenn der Rotor 3 nicht aus seiner Solllage ausgelenkt ist. Im Betriebszustand ist also der Rotor 3 zwischen den Statorpolen 46 berührungslos magnetisch gelagert.

Der Rückschluss 45 und die Spulenkerne 41 sind jeweils aus einem weichmagnetischen Material gefertigt, weil sie als Flussleitelemente zur Führung des magnetischen Flusses dienen. Geeignete weichmagnetische Materialien sind beispielsweise ferromagnetische oder ferrimagnetische Materialien, also insbesondere Eisen, Nickel-Eisen oder Silizium-Eisen.

Die zueinander parallel ausgerichteten Längsschenkel 42 der Spulenkerne 41, die sich alle parallel zur axialen Richtung A erstrecken, und welche den Rotor 3 umgeben, sind es, welche dem Tempelmotor seinen Namen gegeben haben, weil diese parallelen Längsschenkel 41 an die Säulen eines Tempels erinnern.

Der Stator 4 umfasst ferner eine Mehrzahl von Wicklungen 6 zur Erzeugung von elektromagnetischen Drehfeldern, mit welchen der Rotor 3 berührungslos magnetisch antreibbar und berührungslos magnetisch bezüglich des Stators 4 lagerbar ist. Die Wicklungen 6 sind beispielsweise als sechs individuelle Spulen ausgestaltet, wobei an jedem der Längsschenkel 42 jeweils eine Spule vorgesehen ist. Jede Spule ist um den jeweiligen Längsschenkel 42 herum angeordnet, sodass die Spulenachse jeweils parallel zur axialen Richtung A liegt. Beispielsweise trägt jeder Längsschenkel 42 genau eine Spule. Es sind natürlich auch solche Ausgestaltungen möglich, bei welchen jeder Längsschenkel 42 mehr als eine Spule trägt.

Diejenige Ebene, in welcher der Rotor 3 im Betriebszustand gelagert wird, wird auch als radiale Ebene bezeichnet. Die radiale Ebene definiert die x-y-Ebene eines kartesischen Koordinatensystems, dessen z-Achse in axialer Richtung A verläuft.

In einer bevorzugten Ausgestaltung ist der als Tempelmotor ausgestaltete elektromagnetische Drehantrieb nach dem Prinzip eines lagerlosen Motors ausgestaltet. Das heisst, während des Betriebs der Zentrifugalpumpe 1 wirkt der magnetisch wirksame Kern 31 des Rotors 3 mit den Statorpolen 46 des Stators 4 nach dem eingangs beschriebenen Prinzip des lagerlosen Motors zusammen, bei welchem der Rotor 3 berührungslos magnetisch antreibbar und berührungslos magnetisch bezüglich des Stators 4 lagerbar ist.

Das Prinzip des lagerlosen Motors ist dem Fachmann mittlerweile hinlänglich bekannt, sodass eine detaillierte Beschreibung der Funktion nicht mehr notwendig ist. Mit dem Prinzip des lagerlosen Motors ist gemeint, dass der Rotor 3 magnetisch gelagert ist, wobei der Stator 4 als Lager- und Antriebsstator ausgestaltet ist, der sowohl Stator des elektrischen Antriebs als auch Stator der magnetischen Lagerung ist. Dazu umfasst der Stator 4 die Wicklungen 6, mit denen sowohl die Antriebsfunktion als auch die Lagerfunktion realisiert wird. Mit den Wicklungen 6 lässt sich ein elektromagnetisches Drehfeld erzeugen, welches zum einen ein Drehmoment auf den magnetisch wirksamen Kern 31 des Rotors 3 ausübt, das dessen Rotation um die axiale Richtung A bewirkt, und welches zum anderen eine beliebig einstellbare Querkraft auf den magnetisch wirksamen Kern 31 des Rotors 3 ausübt, sodass dessen radiale Position -also seine Position in der radialen Ebene- aktiv steuerbar bzw. regelbar ist. Beim lagerlosen Motor wird also im Unterschied zu klassischen Magnetlagern die magnetische Lagerung und der Antrieb des Motors über elektromagnetische Drehfelder realisiert, die ein Drehmoment und eine einstellbare Querkraft auf den magnetisch wirksamen Kern 31 des Rotors 3 ausüben. Die hierfür benötigten Drehfelder können entweder mit unterschiedlichen Spulen generiert werden, oder die Drehfelder können durch rechnerische Überlagerung der benötigten Ströme und dann mithilfe eines einzigen Spulensystems, hier den Wicklungen 6, generiert werden. Es ist also bei einem lagerlosen Motor nicht möglich, den elektromagnetischen Fluss, der von den Wicklungen 6 des Stators 2 generiert wird, aufzuteilen in einen elektromagnetischen Fluss, der nur für den Antrieb des Rotors 3 sorgt und einen elektromagnetischen Fluss, der nur die magnetische Lagerung des Rotors 3 realisiert.

Gemäss dem Prinzip des lagerlosen Motors sind zumindest drei Freiheitsgrade des Rotors 3, nämlich seine Position in der radialen Ebene und seine Rotation um die axiale Richtung A, aktiv regelbar. Bezüglich seiner axialen Auslenkung in axialer Richtung A ist der magnetisch wirksame Kern 31 des Rotors 3 passiv magnetisch, das heisst nicht ansteuerbar, durch Reluktanzkräfte stabilisiert. Auch bezüglich der verbleibenden zwei Freiheitsgrade, nämlich Verkippungen bezüglich der zur Solldrehachse senkrechten radialen Ebene ist der magnetisch wirksame Kern 31 des Rotors 3 ebenfalls passiv magnetisch stabilisiert. Der Rotor 3 ist also durch das Zusammenwirken des magnetisch wirksamen Kerns 31 mit den Statorpolen 46 in axialer Richtung A sowie gegen Verkippungen (insgesamt drei Freiheitsgrade) passiv magnetisch gelagert oder passiv magnetisch stabilisiert und in der radialen Ebene (zwei Freiheitsgrade) aktiv magnetisch gelagert.

Wie dies allgemein üblich ist bezeichnet auch im Rahmen dieser Anmeldung eine aktive magnetische Lagerung eine solche, die aktiv steuer- bzw. regelbar ist, beispielsweise über die mit den Wicklungen 6 generierten elektromagnetischen Drehfelder. Eine passive magnetische Lagerung oder eine passive magnetische Stabilisierung bezeichnet eine solche, die nicht ansteuerbar bzw. regelbar ist. Die passive magnetische Lagerung oder Stabilisierung basiert beispielsweise auf Reluktanzkräften, welche den Rotor 3 bei einer Auslenkung aus seiner Gleichgewichtslage, also z. B. bei einer Verschiebung in axialer Richtung A oder bei einer Verkippung, wieder in seine Gleichgewichtslage bringen.

Der magnetisch wirksame Kern 31 des Rotors 3 hat einen Durchmesser d, wobei mit dem Durchmesser d der Aussendurchmesser des magnetisch wirksamen Kerns 31 gemeint. Der magnetisch wirksame Kern 31 hat ferner eine Höhe HR, wobei die Höhe HR die Erstreckung in axialer Richtung A ist. Für die passive magnetische Stabilisierung des Rotors 3 ist es besonders vorteilhaft, wenn der Durchmesser d des magnetisch wirksamen Kerns 31 des Rotors 3 grösser ist als das 2,6-fache der Höhe HR des magnetisch wirksamen Kerns 31 des Rotors 3, wenn also die geometrische Bedingung d > 2.6 * HR erfüllt ist.

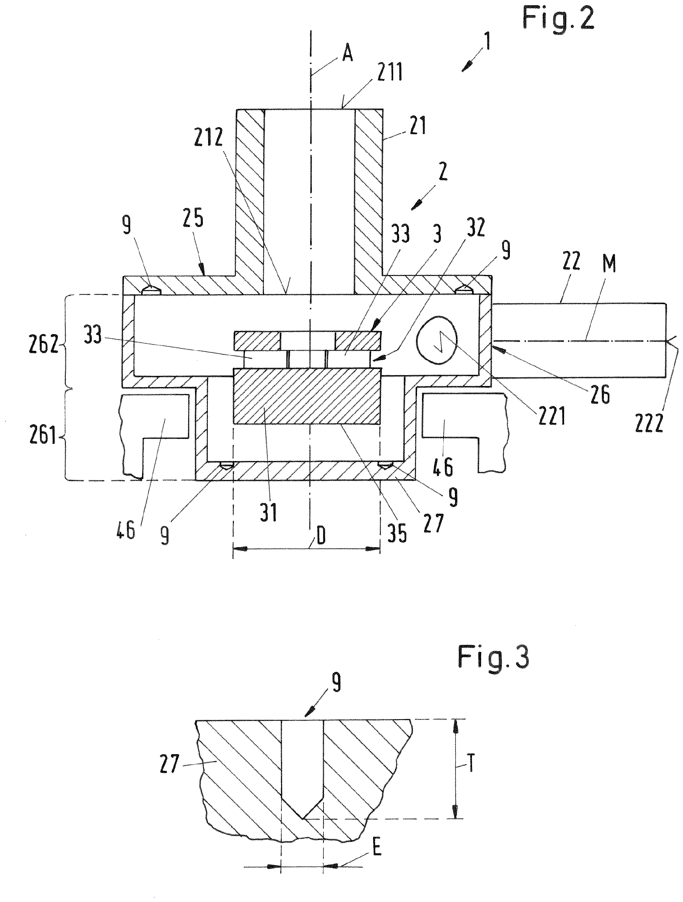

Fig. 2 zeigt in einer schematischen Schnittdarstellung ein Ausführungsbeispiel einer erfindungsgemässen Zentrifugalpumpe 1, welche gemäss der anhand von Fig. 1 erläuterten Ausführungsform ausgestaltet ist. Da es für das Verständnis ausreichend ist, ist in Fig. 2 der Stator 4 nur durch die Statorpole 46 angedeutet. Der Stator 4 und der Rotor 3 sind wiederum so ausgestaltet, dass sie nach dem Prinzip des lagerlosen Motors zusammenwirken, so wie dies im Zusammenhang mit Fig. 1 erläutert wurde.

Das Pumpengehäuse 2 umfasst ein Gehäuseteil 26 und einen Deckel 25, wobei der Deckel 25 auf dem Gehäuseteil 26 angeordnet ist, um das Pumpengehäuse 2 zu verschliessen. Das Gehäuseteil 26 und der Deckel 25 bestehen vorzugsweise aus einem Kunststoff und sind fest und dichtend miteinander verbunden, beispielsweise verschweisst. In anderen Ausgestaltungen sind das Gehäuseteil 26 und/oder der Deckel 26 aus einem metallischen Werkstoff gefertigt.

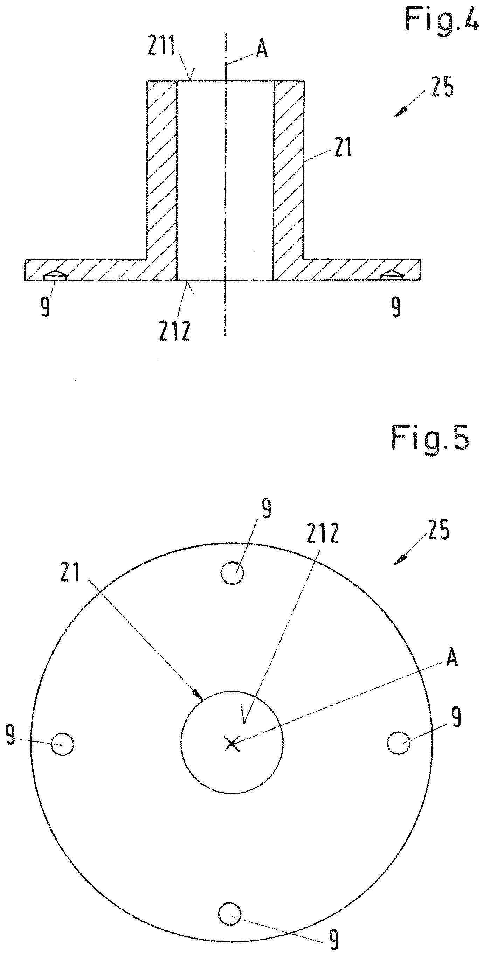

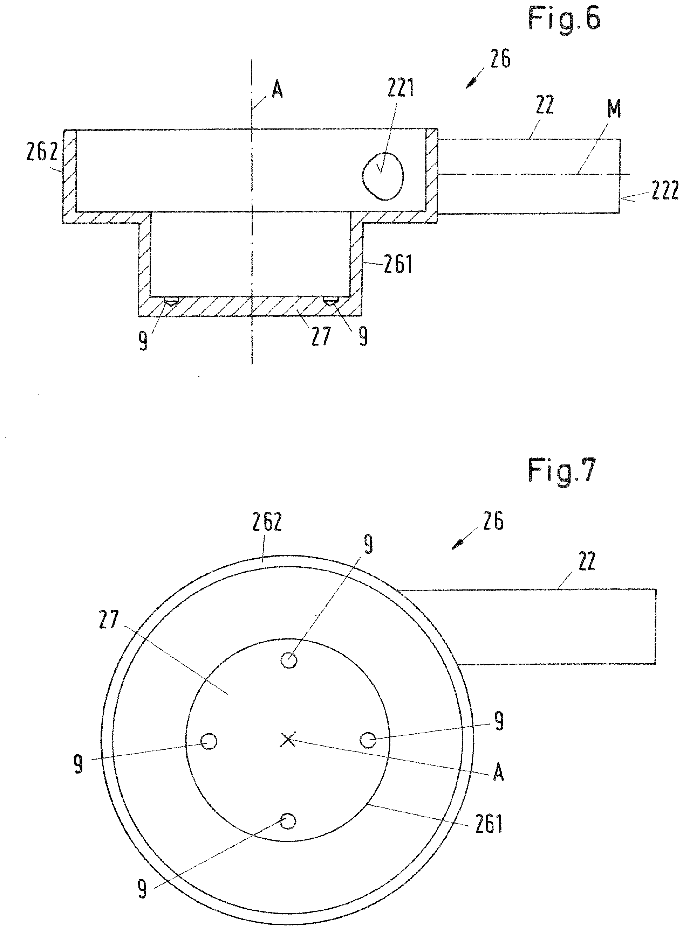

Zum besseren Verständnis zeigen Fig. 4 eine Schnittdarstellung des Deckels 25 in einem Schnitt in axialer Richtung A und Fig. 5 eine Aufsicht auf den Deckel 25 vom Gehäuseteil 26 aus gesehen. Ferner zeigen Fig. 6 eine Schnittdarstellung des Gehäuseteils 26 in einem Schnitt in axialer Richtung und Fig. 7 eine Aufsicht auf das Gehäuseteil 26 vom Deckel 25 aus gesehen.

Das Gehäuseteil 26 umfasst einen unteren zylindrischen Bereich 261 und einen oberen zylindrischen Bereich 262, welche koaxial und bezüglich der axialen Richtung A hintereinander angeordnet sind, wobei der obere zylindrische Bereich 262 einen grösseren Durchmesser aufweist als der untere zylindrische Bereich 261. Der untere zylindrische Bereich 261 des Gehäuseteils 26 umfasst einen Boden 27, welcher das darstellungsgemäss untere Ende des Pumpengehäuses 2 bildet, und welcher senkrecht zur axialen Richtung A angeordnet ist.

Der Deckel 25 liegt auf dem darstellungsgemäss oberen Ende des oberen zylindrischen Bereichs 262 auf und ist fest mit diesem verbunden. Am Deckel 25 ist der Einlass 21 für das zu fördernde Fluid vorgesehen. Der Einlass 21 ist als Einlassstutzen ausgebildet, der vorzugsweise einstückig mit dem Deckel 25 gefertigt ist. Der als Einlassstutzen ausgebildete Einlass 21 erstreckt sich in axialer Richtung A, sodass das Fluid in axialer Richtung in das Pumpengehäuse 2 einströmen kann. Der Einlassstutzen 21 hat vorzugsweise eine Eintrittsfläche 211, durch welche das Fluid in den Einlassstutzen 21 eintritt, sowie eine Austrittsfläche 212, durch welche das Fluid den Einlassstutzen 21 verlässt und das Laufrad 32 anströmt. Bevorzugt ist die Eintrittsfläche 211 grösser als oder gleich gross wie die Austrittsfläche 212.

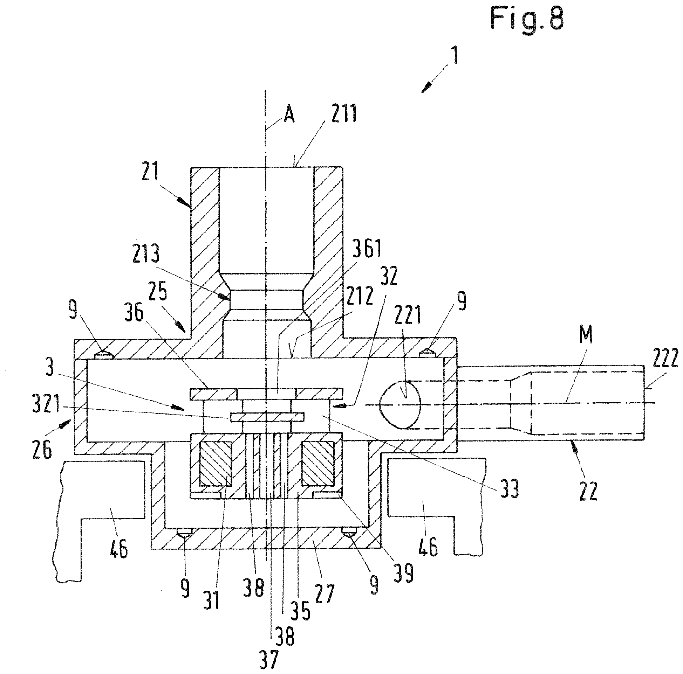

Am oberen zylindrischen Teil 262 ist der Auslass 22 für das zu fördernde Fluid vorgesehen. Der Auslass 22 ist hier als Auslassstutzen 22 ausgebildet, der vorzugsweise einstückig mit dem Gehäuseteil 26 gefertigt ist. Der als Auslassstutzen ausgebildete Auslass 22 erstreckt sich parallel zur radialen Ebene, also senkrecht zum Einlass 21, sodass das Fluid in einer radialen Richtung aus dem Pumpengehäuse 2 herausströmt. Der Auslassstutzen 22 hat eine Eintrittsfläche 221, durch welche das Fluid in den Auslassstutzen 22 eintritt, sowie eine Austrittsfläche 222, durch welche das Fluid den Auslassstutzen 22 verlässt. Bevorzugt ist die Eintrittsfläche 221 kleiner als die Austrittsfläche 222, wie das auch in Fig. 2 dargestellt ist. Vorzugsweise ist der Austrittsstutzen 22 bezüglich seiner äusseren Form zylindrisch ausgestaltet. Damit dennoch die Eintrittsfläche 221 des Auslassstutzens kleiner ist als die Austrittsfläche 222 des Auslassstutzens 21 kann in der Wandung des Auslassstutzens 22 ein Verjüngungsbereich vorgesehen sein, an welchem sich die Dicke der Wandung ändert, sodass sich der Innendurchmesser des Auslassstutzens 22 ändert. Dadurch ändert sich auch der Strömungsquerschnitt für das Fluid, womit die Fläche senkrecht zur Mittelachse M des Auslassstutzens 22 gemeint ist, die von dem Fluid durchströmt wird. Eine solche Ausgestaltung ist beispielsweise in Fig. 8 detaillierter gezeigt.

Bei der zylindrischen Ausgestaltung des Auslassstutzens 22 ist es bevorzugt, dass der Auslassstutzen 22 bezüglich der axialen Richtung A so angeordnet ist, dass die Mittelachse M des Auslassstutzens 22 näher am magnetisch wirksamen Kern 31 des Rotors 3 ist als am Deckel 25 des Pumpengehäuses 2. Das heisst, der Auslassstutzen 22 ist bezüglich der axialen Richtung A nicht mittig im oberen zylindrischen Teil 262 des Gehäuseteils 26 angeordnet sondern in Richtung des Bodens 27 - also darstellungsgemäss nach unten - verschoben.

Der Rotor 3, welcher den magnetisch wirksamen Kern 31, die Ummantelung 35 und das Laufrad 32 umfasst, ist im Pumpengehäuse 2 zwischen dem Boden 27 und dem Deckel 25 des Pumpengehäuses 2 angeordnet, wobei der magnetisch wirksame Kern 31 mit der optionalen Ummantelung 35 darstellungsgemäss unterhalb des Laufrads 32 angeordnet ist. Der magnetisch wirksame Kern 31 inklusive der Ummantelung 35 ist vorzugsweise zylindrisch ausgestaltet.

Das Pumpengehäuse 2 wird - wie das auch in Fig. 1 zu erkennen ist - in den Stator 4 eingesetzt, sodass der obere zylindrische Bereich 262 auf dem Stator 4 aufliegt und der untere zylindrische Bereich 261 des Pumpengehäuses 2 im Stator 4, genauer gesagt zwischen den Statorpolen 46 angeordnet ist. Das Pumpengehäuse 2 kann an dem Stator 4 befestigt sein, beispielsweise mittels Schrauben (nicht dargestellt).

Der Rotor 3 ist so ausgestaltet und angeordnet, dass der magnetisch wirksame Kern 31 des Rotors 3 im Betriebszustand von den Statorpolen 46 umgeben ist und mittels der von den Wicklungen 6 erzeugten elektromagnetischen Felder zwischen den Statorpolen 46 in der radialen Ebene zentrierbar und zur Rotation um die axiale Richtung A antreibbar ist. Wenn der Rotor 3 zentriert und bezüglich der axialen Richtung A nicht ausgelenkt ist, so befindet sich der magnetisch wirksame Kern 31 mittig zwischen den Statorpolen 46.

Der Rotor 3 hat einen Aussendurchmesser D, welches der Durchmesser D des magnetisch wirksamen Kerns 31 inklusive der Ummantelung 35 ist. Falls die Ummantelung 35 vorgesehen ist, so ist der Aussendurchmesser D des Rotors 3 grösser als der Durchmesser d (Fig. 1) des magnetisch wirksamen Kerns 31 des Rotors 3.

Das Laufrad 32 ist vorzugsweise als radiales Laufrad 32 ausgestaltet, sodass die Flügel 33 das in axialer Richtung A durch den Einlass 21 einströmende Fluid in eine radiale Richtung umlenken und zum Auslass 22 fördern.

Erfindungsgemäss ist im Boden 27 und/oder im Deckel 25 mindestens eine Einbuchtung 9 vorgesehen, welche zum Erzeugen einer lokalen Turbulenz ausgestaltet ist. Bei dem hier beschriebenen Ausführungsbeispiel sind insgesamt acht Einbuchtungen 9 vorgesehen, von denen vier im Deckel 25 angeordnet sind und vier im Boden 27.

In anderen Ausführungen können auch nur im Deckel oder nur im Boden Einbuchtungen 9 vorgesehen sein. Auch die Anzahl der Einbuchtungen 9 ist beispielhaft zu verstehen. Es können auch nur eine Einbuchtung oder zwei oder drei Einbuchtungen oder auch mehr als acht oder bedeutend mehr als acht Einbuchtungen vorgesehen sein, beispielsweise mehr als fünfzig. Prinzipiell ist die Anzahl der Einbuchtungen 9 nach oben nicht begrenzt. Die Anzahl und die Anordnung der Einbuchtungen kann an den jeweiligen Anwendungsfall angepasst werden, sodass die gewünschte Reduktion der auf den Rotor 3 wirkenden Kräfte, insbesondere der hydrodynamischen Kräfte erzielt wird.

Die Einbuchtung 9 beziehungsweise die Einbuchtungen 9 stellen eine geometrische Einflussnahme auf die Strömungsverhältnisse im Inneren des Pumpengehäuses 2 dar, deren Zweck die Reduzierung der auf das Laufrad 32 bzw. auf den Rotor 3 wirkenden Kräfte ist, insbesondere der in axialer Richtung A wirkenden Kräfte, sowie der Momente, welche versuchen, den Rotor 3 gegen die radiale Ebene zu verkippen. Die Einbuchtungen 9 verbessern somit die Stabilisierung des Rotors 3 bezüglich aller derjenigen Freiheitsgrade - hier drei - bezüglich denen der Rotor passiv magnetisch gelagert bzw. stabilisiert ist. Die im Boden 27 oder im Deckel 25 angeordneten Einbuchtungen 9 ändern das Strömungsverhalten also derart, dass sich die Position des Rotors 3 mit kleinerem Kraftaufwand und geringeren Wegen einstellen lässt.

Die Reduzierung der Kräfte, insbesondere der hydrodynamischen Kräfte, beruht dabei auf der Strömungsverwirbelung bzw. der Schaffung von Turbulenzen, welche durch die Einbuchtungen 9 verursacht werden, die eine lokale Formänderung des Pumpengehäuses 2 darstellen.

Die erfindungsgemässe Ausgestaltung mit der mindestens einen Einbuchtung 9 kann also prinzipiell ohne geometrische Barrieren zur Reduktion von Strömungsgeschwindigkeiten erfolgen, sowie ohne druckausgleichende Bohrungen durch den Rotor hindurch, sowie ohne enge, keilförmige Fluidspalte, die, wie beispielsweise in klassischen hydrodynamischen Lagern, eine lokale Druckerhöhung bewirken. Vielmehr führen die Einbuchtungen 9 zu lokalen Verwirbelungen und Strömungsablösungen, welche die Kraftwirkungen von laminarer oder turbulenter Strömung auf die umströmten Oberflächen des Rotors 3 reduzieren. Diese Verwirbelungen oder Strömungsablösungen reduzieren den auf den Rotor 3 wirkenden dynamischen Auftrieb und damit die auf den Rotor 3 wirkenden Kräfte.

Natürlich sind aber auch Ausgestaltungen der Erfindung möglich, bei denen zusätzlich beispielsweise druckausgleichende Bohrungen durch den Rotor 3 hindurch vorgesehen. Eine solche Ausführungsform wird weiter hinten anhand des zweiten Ausführungsbeispiels erläutert.

Jede Einbuchtung 9 kann als Grübchen (dimple), Vertiefung, Versenkung, Bohrung oder ähnliches ausgestaltet sein, um lokal die Strömung zu verwirbeln. Die Einbuchtungen 9 können beispielsweise sphärisch sein, oder zylindrisch. Sie können ein quadratisches oder rechteckiges Profil haben. Die Einbuchtungen können auch pyramidenförmig, kegelförmig, kegelstumpfförmig, ringförmig oder mit einer Freiformgeometrie ausgestaltet sein. Aus fertigungstechnischen Gründen sind jedoch solche Geometrien für die Einbuchtungen 9 bevorzugt, die sich mit Bohr- oder Fräswerkzeugen generieren lassen. Daher sind solche Ausgestaltungen der Einbuchtung 9 bevorzugt, bei welche jede Einbuchtung 9 senkrecht zur axialen Richtung A ein kreisförmiges Profil aufweist, also beispielsweise sphärisch oder zylindrisch ausgestaltet ist.

Mit beispielhaftem Charakter ist in Fig. 3 in einer Schnittdarstellung eine der Einbuchtungen 9 dargestellt, die hier als Sacklochbohrung im Boden 27 des Pumpengehäuses 2 ausgestaltet ist.

Im Allgemeinen hat jede Einbuchtung 9 eine Erstreckung E in radialer Richtung, womit die maximale Breite der Einbuchtung 9 bezüglich der radialen Richtung gemeint ist, sowie eine Tiefe T, womit die maximale Erstreckung der Einbuchtung bezüglich der axialen Richtung A ist.

Im Falle der in Fig. 3 dargestellten Ausgestaltung als Sacklochbohrung ist die Erstreckung E in radialer Richtung der Durchmesser E der Bohrung, und die Tiefe T die Länge der Bohrung in axialer Richtung A.

In der Praxis hat es sich als vorteilhaft erwiesen, wenn für jede Einbuchtung 9 die jeweilige Erstreckung E in radialer Richtung mindestens ein Fünfzigstel des Aussendurchmessers D des Rotors 3 beträgt, das heisst E ist grösser oder gleich 0.02 D. Auch ist es vorteilhaft wenn für jede Ausbuchtung 9 die jeweilige Erstreckung E in radialer Richtung höchstens die Hälfte des Aussendurchmessers D des Rotors 3 beträgt, das heisst E ist kleiner oder gleich 0.5 D.

Bezüglich der axialen Richtung A hat es sich als vorteilhaft erwiesen, wenn für jede Einbuchtung 9 die jeweilige Tiefe T in axialer Richtung A mindestens ein Hundertfünfzigstel des Aussendurchmessers D des Rotors 3 beträgt, das heisst T ist grösser oder gleich 0.015 D. Besonders bevorzugt ist es, wenn die jeweilige Tiefe T in axialer Richtung A mindestens ein Hundertstel des Aussendurchmessers D des Rotors 3 beträgt, wenn also T grösser oder gleich 0.01 D ist.

Ferner ist es bezüglich der axialen Richtung A bevorzugt, wenn für jede Einbuchtung 9 die jeweilige Tiefe T in axialer Richtung A höchstens ein Zehntel des Aussendurchmessers D des Rotors 3 beträgt, das heisst T ist Kleiner oder gleich 0.1 D.

Bezüglich der Position der Einbuchtung 9 bzw. der Einbuchtungen 9 ist es bevorzugt, dass die Einbuchtung 9 bzw. die Einbuchtungen 9 in einem radial aussen liegenden Randbereich des Bodens 27 und/oder des Deckels 25 angeordnet ist/sind. Das bedeutet insbesondere, wie es in den Fig. 2, 4, 5, 6 dargestellt ist, dass die Einbuchtung(en) 9 im Deckel 25 des Pumpengehäuses 2 näher am radial äusseren Rand des Deckels 25 liegt/liegen als am Zentrum des Deckels 25, und dass die Einbuchtung(en) 9 im kreisförmigen Boden 27 des Pumpengehäuses 2 näher am radial äusseren Rand des Bodens 27 liegt/liegen als am Zentrum des Bodens 27.

In bevorzugten Ausgestaltungen der Erfindung sind das Pumpengehäuse 2 und/oder das Flügelrad 32 und/oder die Ummantelung 35 des Rotors 3 aus einem Kunststoff gefertigt. Vorzugsweise sind das Pumpengehäuse 2 und das Flügelrad 32 und die Ummantelung 35 aus einem Kunststoff gefertigt. Dabei können das Pumpengehäuse 2 und das Flügelrad 3 und die Ummantelung 35 alle aus dem gleichen Kunststoff gefertigt sein oder aus mindestens zwei verschiedenen Kunststoffen.

Die Auswahl geeigneter Kunststoffe richtet sich natürlich nach dem jeweiligen Anwendungsfall. Geeignete Kunststoffe sind beispielsweise: PolyEthylene (PE), PolyPropylene (PP), Low Density PolyEthylene (LDPE), Ultra Low Density PolyEthylene (ULDPE), Ethylene Vinyl Acetate (EVA), PolyEthylene Terephthalate (PET), PolyVinylChlorid (PVC), PolyVinyliDene Fluoride (PVDF), Acrylonitrile Butadiene Styrene (ABS), Polyacryl, PolyCarbonate.

In anderen ebenfalls bevorzugten Ausgestaltungen der Erfindung sind das Pumpengehäuse 2 und/oder das Flügelrad 32 und/oder die Ummantelung 35 des Rotors 3 aus einem metallischen oder aus mehreren verschieden metallischen Werkstoffen gefertigt Beispiele für bevorzugte metallische Werkstoffe sind Titan oder Edelstähle.

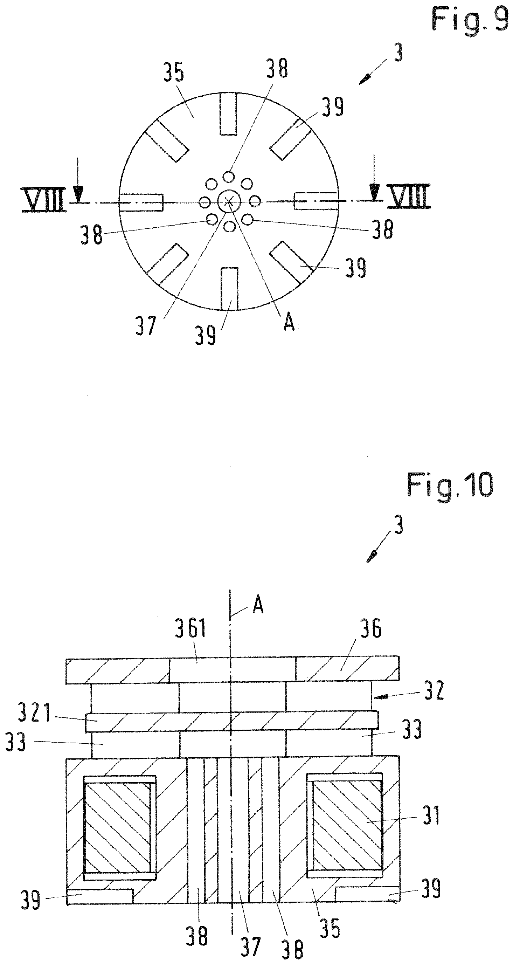

Fig. 8 zeigt in einer schematischen Schnittdarstellung ein zweites Ausführungsbeispiel einer erfindungsgemässen Zentrifugalpumpe 1. Zum besseren Verständnis zeigt Fig. 9 noch eine Aufsicht auf den Rotor des zweiten Ausführungsbeispiels vom Boden 27 des Pumpengehäuses 2 aus. In Fig. 9 ist ferner die Schnittlinie VIII-VIII, angezeigt, entlang welcher der in Fig. 8 dargestellte Schnitt erfolgte.

Im Folgenden wird nur auf die Unterschiede zu dem vorangehend beschriebenen ersten Ausführungsbeispiel eingegangen. Insbesondere haben die Bezugszeichen die gleiche Bedeutung wie sie bereits im Zusammenhang mit dem ersten Ausführungsbeispiel erläutert sind. Es versteht sich, dass alle vorangehenden Erläuterungen in gleicher Weise oder in sinngemäss gleicher Weise auch für das zweite Ausführungsbeispiel gelten.

Bei dem zweiten Ausführungsbeispiel sind noch weitere Massnahmen realisiert, welche je nach Anwendungsfall die Stabilisierung des Rotors 3 bezüglich der axialen Richtung A und bezüglich Verkippungen gegen die radiale Ebene, also bezüglich der drei passiv magnetisch stabilisierten Freiheitsgrade, noch weiter verbessern können. Es versteht sich, dass diese Massnahmen zwar alle realisiert sein können, aber nicht alle realisiert sein müssen. Es sind also auch solche Ausführungsformen möglich, bei denen beispielsweise eine oder mehrere der anhand des zweiten Ausführungsbeispiels beschriebenen Massnahmen mit dem ersten Ausführungsbeispiel kombiniert werden.

Bei dem in Fig. 8 und Fig. 9 dargestellten zweiten Ausführungsbeispiel der erfindungsgemässen Zentrifugalpumpe 1 weist der als Einlassstutzen ausgestaltete Einlass 21 des Pumpengehäuses 2 einen Verengungsbereich 213 auf, in welchem der Strömungsquerschnitt senkrecht zur axialen Richtung A kleiner ist als die Eintrittsfläche 211 und kleiner als die Austrittsfläche 212 des Einlassstutzens 21. Zudem ist die Eintrittsfläche 211 des Einlassstutzens 21 grösser als seine Austrittsfläche 212, Vergleicht man also die jeweiligen Flächen miteinander, so ist die Eintrittsfläche 211 grösser als die Austrittsfläche 212, und die Austrittsfläche 212 ist grösser als der Strömungsquerschnitt im Verengungsbereich 213.

Der Auslass 22 des Pumpengehäuses 2 ist in sinngemäss gleicher Weise ausgestaltet wie dies für das erste Ausführungsbeispiel erläutert wurde, also derart, dass die Eintrittsfläche 221 des Auslassstutzens 22 kleiner ist als die Austrittsfläche 222 des Auslassstutzens 22, und dass der Auslassstutzen 22 bezüglich der axialen Richtung A so angeordnet ist, dass die Mittelachse M näher am ringförmigen magnetisch wirksamen Kern 31 des Rotors 3 ist als am Deckel 25 des Pumpengehäuses 2. In Fig. 8 ist zudem anhand der gestrichelten Linien im Auslass 22 dargestellt, wie das Innere des Auslassstutzens 22 ausgestaltet ist, sodass die Austrittsfläche 222 des Auslassstutzens 22 grösser ist als die Eintrittsfläche 221 des Auslassstutzens 21.

Die Grösse der Austrittsfläche 222 des Auslassstutzens 22 und die Grösse der Eintrittsfläche 211 des Einlassstutzens 21 inklusive der sie jeweils umgebenden Wandung sind üblicherweise durch Normierungen vorgegeben. Der Aussendurchmesser sowohl des Einlassstutzens 21 an der Eintrittsfläche 211 sowie der Aussendurchmesser des Auslassstutzens 22 an der Austrittsfläche 222 ist so bemessen, dass die Zentrifugalpumpe 1 mit üblichen Leitungen oder Rohren in einem Strömungssystem verbunden werden kann

Ferner weist der Rotor 3 eine Deckplatte 36 auf, welche ringscheibenförmig ausgestaltet ist, und welche die Flügel 33 des Laufrads 32 an ihrer dem Einlass 21 bzw. dem Deckel 25 zugewandten Kante überdeckt, wobei in der Deckplatte 36 eine zentral angeordnete Öffnung 361 vorgesehen ist, durch welche das Fluid das Laufrad 32 anströmen kann.

Optional kann der magnetisch wirksame Kern 31 des Rotors 3 eine zentrale Bohrung 37 aufweisen, die sich in axialer Richtung A vollständig durch den magnetisch wirksamen Kern 31 sowie die optionale Ummantelung 35 hindurch erstreckt.

Alternativ oder ergänzend kann der Rotor 3 eine Ausgleichsbohrung 38 oder eine Mehrzahl von Ausgleichsbohrungen 38 umfassen, wobei sich jede Ausgleichsbohrung 38 in axialer Richtung A vollständig durch den magnetisch wirksamen Kern 31 des Rotors 3 sowie die optionale Ummantelung 35 hindurch erstreckt. Jede Ausgleichsbohrung 38 ist vorzugsweise dezentral also nicht im Zentrum des Rotors 3 angeordnet.

Bei dem zweiten Ausführungsbeispiel ist eine Mehrzahl von Ausgleichsbohrungen 38 vorgesehen, nämlich acht Ausgleichsbohrungen 38.

Die Ausgleichsbohrungen 38 sind vorzugsweise auf einer Kreislinie angeordnet, wobei der Mittelpunkt des Kreises im Zentrum des Rotors 3 liegt. Falls also die zentrale Bohrung 37 im Rotor 3 vorgesehen ist, so sind die Ausgleichsbohrungen 38 kreisförmig um die zentrale Bohrung 37 herum angeordnet. Vorzugsweise sind höchstens oder genau acht Ausgleichsbohrungen 38 vorgesehen, die vorzugsweise äquidistant um die zentrale Bohrung 37 des Rotors 3 oder um das Zentrum des Rotors 3 herum angeordnet sind.

Jede Ausgleichsbohrung 38 weist jeweils einen Durchmesser auf, der kleiner ist als der Durchmesser der zentralen Bohrung 37.

Auf der dem Deckel 25 abgewandten und dem Boden 27 zugewandten axialen Stirnfläche des Rotors 3 ist eine Mehrzahl von rückwärtigen Schaufeln 39 vorgesehen. Im Betriebszustand liegen diese rückwärtigen Schaufeln 39 dem Boden 27 des Pumpengehäuses 2 gegenüber. Bei dem zweiten Ausführungsbeispiel sind insgesamt acht rückwärtige Schaufeln 39 vorgesehen.

Die rückwärtigen Schaufeln 39 können beispielsweise dadurch realisiert werden, dass in der Ummantelung 35 des Rotors 3 Ausnehmungen vorgesehen werden, sodass die rückwärtigen Schaufeln 39 jeweils zwischen zwei benachbarten Ausnehmungen entstehen.

Ferner ist es natürlich auch möglich die rückwärtigen Schaufeln 39 als Erhebungen auszugestalten. Dazu kann beispielsweise eine einem Laufrad ähnliche Struktur generiert werden, die dann auf der axialen Stirnfläche des Rotors 3 befestigt wird, sodass die rückwärtigen Schaufeln 39 dem Boden 27 des Pumpengehäuses 2 gegenüberliegen. Natürlich können die rückwärtigen Schaufeln 38 auch einzeln gefertigt werden, und dann auf der axialen Stirnfläche des Rotors 3 befestigt werden.

Vorzugsweise beginnt jede rückwärtige Schaufel 39 am radial äusseren Rand der axialen Stirnfläche des Rotors 3 und erstreckt sich von dort radial nach innen. Dabei kann sich jede rückwärtige Schaufel 39 bis in das Zentrum der axialen Stirnfläche bzw. bis an die zentrale Bohrung 37 heran erstrecken oder jede rückwärtige Schaufel 39 weist, wie in Fig. 9 gezeigt, in radialer Richtung eine Länge auf, die kleiner ist als der Radius der axialen Stirnfläche, beispielsweise halb so gross. In anderen Ausgestaltungen können die rückwärtigen Schaufeln 39 auch gekrümmt ausgestaltet sein.

Bei dem zweiten Ausführungsbeispiel ist an dem Laufrad 32 eine ring- oder kreisscheiben förmige Druckplatte 321 vorgesehen, die senkrecht zur axialen Richtung A ausgerichtet ist. Die Druckplatte 321 ist bezüglich der axialen Richtung A zwischen dem magnetisch wirksamen Kern und dem dem Deckel 25 des Pumpengehäuses 2 zugewandten Ende des Laufrads 32 angeordnet, beispielsweise auf halber Höhe der Flügel 33 des Laufrads 32. Die Druckplatte 321 erstreckt sich zwischen den Flügeln des Laufrads 32. Falls der Rotor 3 eine Deckplatte 36 hat, ist die Druckplatte 321 bezüglich der axialen Richtung A zwischen dem magnetisch wirksamen Kern 31 und der Deckplatte 36 sowie parallel zur Deckplatte 36 angeordnet. Die Druckplatte 321 erstreckt sich zwischen allen Flügeln 33. Bezüglich der radialen Richtung ist die Druckplatte 321 zentriert bezüglich des Rotors 3 angeordnet und erstreckt sich in radialer Richtung zumindest so weit, dass sie alle Ausgleichsbohrungen 38 axial beabstandet überdeckt. Bei der in Fig. 8 dargestellten Ausführungsform ist der Durchmesser der Druckplatte 321 deutlich kleiner als der Durchmesser des Laufrads 32, der an den Flügeln 33 gemessen wird.

Fig. 10 zeigt in einer schematischen Schnittdarstellung eine Variante für den Rotor 3, die sich dadurch von dem in Fig. 8 dargestellten Rotor 3 unterscheidet, dass die Druckplatte 321 einen grösseren Durchmesser hat. Bei der in Fig. 10 gezeigten Variante erstreckt sich die Druckplatte 321 in radialer Richtung etwa bis an das radial aussenliegende Ende der Flügel 33 des Laufrads 32.

## Patentansprüche

1. Zentrifugalpumpe zum Fördern eines Fluids mit einem Pumpengehäuse (2), in welchem ein Rotor (3) zum Fördern des Fluids vorgesehen ist, und mit einem Stator (4), der mit dem Rotor (3) einen elektromagnetischen Drehantrieb zum Rotieren des Rotors (3) um eine axiale Richtung (A) bildet, wobei der Stator (4) als Lager- und Antriebsstator ausgestaltet ist, mit welchem der Rotor (3) berührungslos magnetisch antreibbar und berührungslos magnetisch bezüglich des Stators (4) lagerbar ist, wobei der Rotor (3) in der axialen Richtung (A) magnetisch passiv gelagert ist, und in einer zur axialen Richtung (A) senkrechten radialen Ebene aktiv magnetisch gelagert ist, wobei das Pumpengehäuse (2) einen Boden (27) und einen Deckel (25) umfasst, und wobei der Rotor (3) bezüglich der axialen Richtung (A) zwischen dem Boden (27) und dem Deckel (25) in dem Pumpengehäuse (2) angeordnet ist, **dadurch gekennzeichnet, dass** im Boden (27) und/oder in dem Deckel (25) mindestens eine Einbuchtung (9) vorgesehen ist, welche zum Erzeugen einer lokalen Turbulenz ausgestaltet ist.

2. Zentrifugalpumpe nach Anspruch 1, wobei der Rotor (3) einen ringförmigen oder scheibenförmigen magnetisch wirksamen Kern (31) umfasst, sowie ein Laufrad (32) mit einer Mehrzahl von Flügeln (33) zum Fördern des Fluids.

3. Zentrifugalpumpe nach einem der vorangehenden Ansprüche, wobei am Deckel (25) des Pumpengehäuses (2) ein Einlass (21) für das Fluid vorgesehen ist, welcher so ausgestaltet ist, dass das Fluid in axialer Richtung (A) in das Pumpengehäuse (2) einströmen kann, und wobei das Pumpengehäuse (2) einen Auslass (22) für das Fluid umfasst, welcher so ausgestaltet ist, dass das Fluid in einer radialen Richtung aus dem Pumpengehäuse (2) herausströmen kann.

4. Zentrifugalpumpe nach einem der Ansprüche 2-3, wobei der Stator (4) eine Vielzahl von Statorpolen (46) aufweist, die ringförmig angeordnet sind, und wobei das Pumpengehäuse (2) mit dem darin angeordneten Rotor (3) so ausgestaltet ist, dass es zwischen den Statorpolen (46) derart in den Stator (4) einsetzbar ist, dass der magnetisch wirksame Kern (31) des Rotors (3) von den Statorpolen (46) umgeben ist.

5. Zentrifugalpumpe nach einem der vorangehenden Ansprüche, wobei der Rotor (3) einen Aussendurchmesser (D) hat, und wobei jede Einbuchtung (9) bezüglich der radialen Richtung eine Erstreckung (E) aufweist, die mindestens ein Fünfzigstel des Aussendurchmessers (D) des Rotors (3) beträgt.

6. Zentrifugalpumpe nach einem der vorangehenden Ansprüche, wobei der Rotor (3) einen Aussendurchmesser (D) hat, und wobei jede Einbuchtung (9) bezüglich der radialen Richtung eine Erstreckung (E) aufweist, die höchstens die Hälfte des Aussendurchmessers (D) des Rotors (3) beträgt.

7. Zentrifugalpumpe nach einem der vorangehenden Ansprüche, wobei der Rotor (3) einen Aussendurchmesser (D) hat, und wobei jede Einbuchtung (9) bezüglich der axialen Richtung (A) eine Tiefe (T) aufweist, die mindestens ein Hundertfünfzigstel, vorzugsweise mindestens ein Hunderstel des Aussendurchmessers (D) des Rotors (3) beträgt.

8. Zentrifugalpumpe nach einem der vorangehenden Ansprüche, wobei der Rotor (3) einen Aussendurchmesser (D) hat, und wobei jede Einbuchtung (9) bezüglich der axialen Richtung (A) eine Tiefe (T) aufweist, die höchstens ein Zehntel des Aussendurchmessers (D) des Rotors (3) beträgt.

9. Zentrifugalpumpe nach einem der vorangehenden Ansprüche, wobei jede Einbuchtung (9) senkrecht zur axialen Richtung (A) ein kreisförmiges Profil aufweist.

10. Zentrifugalpumpe nach einem der vorangehenden Ansprüche, wobei sowohl im Deckel (25) als auch im Boden (27) des Pumpengehäuses (2) mindestens eine Einbuchtung (9) vorgesehen ist.

11. Zentrifugalpumpe nach einem der vorangehenden Ansprüche, wobei jede Einbuchtung (9) in einem radial aussen liegenden Randbereich des Pumpengehäuses (2) angeordnet ist.

12. Zentrifugalpumpe nach einem der vorangehenden Ansprüche, wobei das Pumpengehäuse (2) aus einem Kunststoff gefertigt ist.

13. Zentrifugalpumpe nach einem der Ansprüche 2-12, wobei das Laufrad (32) aus einem Kunststoff gefertigt ist.

14. Zentrifugalpumpe nach einem der vorangehenden Ansprüche, wobei der Rotor (3) eine Ummantelung (35) aufweist, welche den magnetisch wirksamen Kern (31) des Rotors vollständig umschliesst, und welche aus einem Kunststoff gefertigt ist.

15. Pumpengehäuse, in welchem ein Rotor (3) zum Fördern eines Fluids vorgesehen ist, **dadurch gekennzeichnet, dass** das Pumpengehäuse (2) für eine Zentrifugalpumpe (1) ausgestaltet ist, welche nach einem der vorangehenden Ansprüche ausgestaltet ist.

## Claims

1. A centrifugal pump for conveying a fluid, having a pump housing (2) in which a rotor (3) is provided for conveying the fluid, and having a stator (4) which, together with the rotor (3), forms an electromagnetic rotary drive for rotating the rotor (3) about an axial direction (A), wherein the stator (4) is designed as a bearing and drive stator with which the rotor (3) can be magnetically driven without contact and magnetically levitated without contact with respect to the stator (4), wherein the rotor (3) is passively magnetically levitated in the axial direction (A), and is actively magnetically levitated in a radial plane perpendicular to the axial direction (A), wherein the pump housing (2) comprises a bottom (27) and a cover (25), and wherein the rotor (3) is arranged in the pump housing (2) between the bottom (27) and the cover (25) with respect to the axial direction (A), **characterized in that** at least one indentation (9) is provided in the bottom (27) and/or in the cover (25), which indentation (9) is designed to generate a local turbulence.

2. A centrifugal pump according to claim 1, wherein the rotor (3) comprises an annular or disk-shaped magnetically effective core (31), and an impeller (32) having a plurality of vanes (33) for conveying the fluid.

3. A centrifugal pump according to anyone of the preceding claims, wherein an inlet (21) for the fluid is provided on the cover (25) of the pump housing (2), which is designed in such a way that the fluid can flow into the pump housing (2) in the axial direction (A), and wherein the pump housing (2) comprises an outlet (22) for the fluid, which is designed in such a way that the fluid can flow out of the pump housing (2) in a radial direction.

4. A centrifugal pump according to anyone of the claims 2 to 3, wherein the stator (4) has a plurality of stator poles (46) which are arranged annularly, and wherein the pump housing (2) with the rotor (3) arranged therein is designed in such a way that it can be inserted into the stator (4) between the stator poles (46) in such a way that the magnetically effective core (31) of the rotor (3) is surrounded by the stator poles (46).

5. A centrifugal pump according to anyone of the preceding claims, wherein the rotor (3) has an outer diameter (D), and wherein each indentation (9) has an extension (E) with respect to the radial direction which is at least one fiftieth of the outer diameter (D) of the rotor (3).

6. A centrifugal pump according to anyone of the preceding claims, wherein the rotor (3) has an outer diameter (D), and wherein each indentation (9) has an extension (E) with respect to the radial direction which is at most half the outer diameter (D) of the rotor (3).

7. A centrifugal pump according to anyone of the preceding claims, wherein the rotor (3) has an outer diameter (D), and wherein each indentation (9) has a depth (T) with respect to the axial direction (A) which is at least one hundred fiftieth, preferably at least one hundredth of the outer diameter (D) of the rotor (3).

8. A centrifugal pump according to anyone of the preceding claims, wherein the rotor (3) has an outer diameter (D), and wherein each indentation (9) has a depth (T) with respect to the axial direction (A) which is at most one tenth of the outer diameter (D) of the rotor (3).

9. A centrifugal pump according to anyone of the preceding claims, wherein each indentation (9) has a circular profile perpendicular to the axial direction (A).

10. A centrifugal pump according to anyone of the preceding claims, wherein at least one indentation (9) is provided in both the cover (25) and the bottom (27) of the pump housing (2).

11. A centrifugal pump according to anyone of the preceding claims, wherein each indentation (9) is arranged in a radially outer edge region of the pump housing (2).

12. A centrifugal pump according to anyone of the preceding claims, wherein the pump housing (2) is made of a plastic.

13. A centrifugal pump according to anyone of the claims 2 to 12, wherein the impeller (32) is made of a plastic.

14. A centrifugal pump according to anyone of the preceding claims, wherein the rotor (3) has a jacket (35) which completely encloses the magnetically effective core (31) of the rotor, and which is made of a plastic.

15. A pump housing, in which a rotor (3) is provided for conveying a fluid, **characterized in that** the pump housing (2) is designed for a centrifugal pump (1), which is designed according to anyone of the preceding claims.

## Revendications

1. Pompe centrifuge pour le refoulement d'un fluide, comprenant un carter de pompe (2) dans lequel un rotor (3) est prévu pour le refoulement du fluide, et comprenant un stator (4) qui forme avec le rotor (3) un entraînement rotatif électromagnétique pour la rotation du rotor (3) autour d'une direction axiale (A), le stator (4) étant configuré en tant que stator de palier et d'entraînement avec lequel le rotor (3) peut être entraîné magnétiquement sans contact et peut être supporté magnétiquement sans contact par rapport au stator (4), le rotor (3) étant supporté magnétiquement passivement dans la direction axiale (A) et étant supporté magnétiquement activement dans un plan radial perpendiculaire à la direction axiale (A), le carter de pompe (2) comprenant un fond (27) et un couvercle (25), et le rotor (3) étant disposé par rapport à la direction axiale (A) entre le fond (27) et le couvercle (25) dans le carter de pompe (2), **caractérisée en ce qu'**au moins un renfoncement (9) est prévu dans le fond (27) et/ou dans le couvercle (25), lequel renfoncement est configuré pour générer une turbulence locale.

2. Pompe centrifuge selon la revendication 1, dans laquelle le rotor (3) comprend un noyau magnétiquement actif (31) de forme annulaire ou en forme de disque, ainsi qu'une roue (32) avec une pluralité d'aubes (33) pour le refoulement du fluide.

3. Pompe centrifuge selon l'une quelconque des revendications précédentes, dans laquelle une entrée (21) pour le fluide est prévue sur le couvercle (25) du carter de pompe (2), laquelle entrée est configurée de telle sorte que le fluide peut affluer dans le carter de pompe (2) dans la direction axiale (A), et dans laquelle le carter de pompe (2) comprend une sortie (22) pour le fluide, laquelle sortie est configurée de telle sorte que le fluide peut s'écouler hors du carter de pompe (2) dans une direction radiale.

4. Pompe centrifuge selon l'une quelconque des revendications 2 à 3, dans laquelle le stator (4) présente une pluralité de pôles de stator (46) qui sont disposés de manière annulaire, et dans laquelle le carter de pompe (2) avec le rotor (3) disposé à l'intérieur est configuré de telle sorte qu'il peut être inséré dans le stator (4) entre les pôles de stator (46) de telle sorte que le noyau magnétiquement actif (31) du rotor (3) est entouré par les pôles de stator (46).

5. Pompe centrifuge selon l'une quelconque des revendications précédentes, dans laquelle le rotor (3) présente un diamètre extérieur (D), et dans laquelle chaque renfoncement (9) présente, par rapport à la direction radiale, une étendue (E) qui représente au moins un cinquantième du diamètre extérieur (D) du rotor (3).

6. Pompe centrifuge selon l'une quelconque des revendications précédentes, dans laquelle le rotor (3) présente un diamètre extérieur (D), et dans laquelle chaque renfoncement (9) présente, par rapport à la direction radiale, une étendue (E) qui représente au plus la moitié du diamètre extérieur (D) du rotor (3).

7. Pompe centrifuge selon l'une quelconque des revendications précédentes, dans laquelle le rotor (3) présente un diamètre extérieur (D), et dans laquelle chaque renfoncement (9) présente, par rapport à la direction axiale (A), une profondeur (T) qui représente au moins un cent cinquantième, de préférence au moins un centième du diamètre extérieur (D) du rotor (3).

8. Pompe centrifuge selon l'une quelconque des revendications précédentes, dans laquelle le rotor (3) présente un diamètre extérieur (D), et dans laquelle chaque renfoncement (9) présente, par rapport à la direction axiale (A), une profondeur (T) qui représente au plus un dixième du diamètre extérieur (D) du rotor (3).

9. Pompe centrifuge selon l'une quelconque des revendications précédentes, dans laquelle chaque renfoncement (9) présente, perpendiculairement à la direction axiale (A), un profil circulaire.

10. Pompe centrifuge selon l'une quelconque des revendications précédentes, dans laquelle au moins un renfoncement (9) est prévu aussi bien dans le couvercle (25) que dans le fond (27) du carter de pompe (2).

11. Pompe centrifuge selon l'une quelconque des revendications précédentes, dans laquelle chaque renfoncement (9) est disposé dans une région de bord située radialement à l'extérieur du carter de pompe (2).

12. Pompe centrifuge selon l'une quelconque des revendications précédentes, dans laquelle le carter de pompe (2) est fabriqué en une matière plastique.

13. Pompe centrifuge selon l'une quelconque des revendications 2 à 12, dans laquelle la roue (32) est fabriquée en une matière plastique.

14. Pompe centrifuge selon l'une quelconque des revendications précédentes, dans laquelle le rotor (3) présente une enveloppe (35) qui entoure complètement le noyau magnétiquement actif (31) du rotor, et qui est fabriquée en une matière plastique.

15. Carter de pompe, dans lequel un rotor (3) est prévu pour le refoulement d'un fluide, **caractérisé en ce que** le carter de pompe (2) est configuré pour une pompe centrifuge (1) qui est configurée selon l'une quelconque des revendications précédentes.
